# EUROPEAN PATENT APPLICATION

(11) **EP 4 482 104 A1**
(43) Date of publication of application: **25.12.2024**
(21) Application number: 24182145.3
(22) Date of filing: 14.06.2024
(51) Int. Cl.: H04L 41/147, H04L 41/16, H04L 43/10, H04L 41/0681

(54) **A METHOD, DEVICE AND COMPUTER PROGRAM FOR MONITORING A NETWORK**

(30) Priority: 19.06.2023 GB 202309156
(71) Applicant: Sony Group Corporation, Tokyo 108-0075 (JP)
(72) Inventor: PORTER, Robert Mark Stefan, Basingstoke, RG22 4SB (GB); THORPE, Jonathan Richard, Basingstoke, RG22 4SB (GB)
(74) Representative: D Young & Co LLP

(57) **Abstract**

According to embodiments of the disclosure, there is provided a method of monitoring a network, comprising: obtaining expected network behaviour information relating to a first device on the network, the expected network behaviour information comprising a first parameter associated with an expected behaviour of the first device on the network; receiving a message from the first device over the network; determining, based on the message, a second parameter associated with a current behaviour of the first device on the network, determining whether the current behaviour of the first device on the network is within a predetermined boundary from the expected behaviour by comparing the second parameter to the first parameter; and generating an alert when it is determined that the current behaviour of the first device on the network is not within the predetermined boundary from the expected behaviour.

## Description

### BACKGROUND

### Field of the Disclosure

The present disclosure relates to a method, device and computer program for monitoring a network.

### Description of the Related Art

The "background" description provided is for the purpose of generally presenting the context of the disclosure. Work of the presently named inventors, to the extent it is described in the background section, as well as aspects of the description which may not otherwise qualify as prior art at the time of filing, are neither expressly or impliedly admitted as prior art against the present disclosure.

When devices are connected over a network, they are configured to send and receive data (in the form of messages) over the network in a particular way. For example, devices typically send messages according to a particular network protocol. However, in some instances a device may behave unexpectedly, which can result in a number of problems on the network. For example, if a device is not sending updates at an appropriate frequency to a central registration service of the network, the central registration service may at times have incorrect information about the device or be bombarded with unnecessary requests. Moreover, a device that is behaving unexpectedly may be operating out of specification due to an error and need to be replaced. It is therefore desirable to be able to quickly and accurately identify a device which is not behaving as expected on the network.

Current methods used by device manufacturers to identify unexpected behaviour involve testing devices against their specifications offline in a simulated network environment, or in interoperability tests with other manufacturers. However, these tests do not take into account issues that can arise in live systems, when the device is connected to a large network of many devices using the network simultaneously. That is, in a real-world environment the devices may behave differently in ways that are not anticipated by offline tests.

It is therefore desirable to be able to identify a device which is not behaving as expected on the network in a real-world scenario. It is an aim of the disclosure to address these issues.

### SUMMARY

The present disclosure is defined by the claims.

### BRIEF DESCRIPTION OF THE DRAWINGS

Non-limiting embodiments and advantages of the present disclosure will be best understood by reference to the following detailed description taken in conjunction with the accompanying drawings, wherein:
Figure 1 is a diagram of a network 100 according to embodiments.
Figure 2 is a block diagram of a CRS 105 in embodiments.
Figure 3 shows an operation of the CRS 105 on the network 100 in embodiments.
Figure 4 is a flow chart of a method according to embodiments.
Figure 5 is a flow chart of a method according to embodiments.
Figure 6 is a flow chart of a method according to embodiments.

Like reference numerals designate identical or corresponding parts throughout the drawings.

### DETAILED DESCRIPTION OF THE EMBODIMENTS

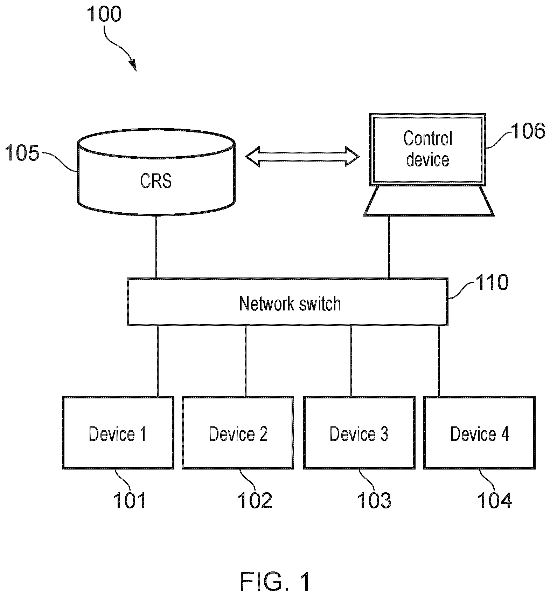

Figure 1 shows a network 100 according to embodiments of the disclosure.

In the network 100, a network switch 110 is shown. The network switch 110 routes data packets around the network 100. Although only a single switch is shown, the disclosure is not limited in this regard and in embodiments the function of the network switch 110 may be provided by any number of devices, for example switches, routers or other suitable networking equipment.

The network switch 110 is connected to four devices on the network; device 1 101, device 2 102, device 3 103 and device 4 104. These connections may be wired or wireless or may be a combination of the two. However, in embodiments the network switch 110 may be connected to any suitable number of devices on the network.

Additionally connected to the network switch 110 is a central registration service (CRS) 105 and a control device 106. The CRS 105 maintains a register of each device connected to the network 100, and stores device information related to the respective devices. This is discussed in more detail below. The CRS 105 may be any suitable type of registration device known in the art that is capable of this function. Although a single CRS 105 is shown in Figure 1, the disclosure is not limited in this regard and in further embodiments the functionality of the CRS 105 may be provided over a plurality of federated or clustered devices.

The control device 106 is used to control other devices that are connected to the network 100, such as devices 101, 102, 103 and 104. For example, in embodiments the control device 106 may manage connections between devices over the network, control how the network switch 110 routes data packets around the network 100, control which devices are able to join the network and in which order, or the like. In embodiments, the control device 106 is configured to receive information from a user via a user interface. For example, a user may be able to direct the control device to manage connections between devices over the network in a manner that is desired by the user. The control device 106 may be configured to provide information about the network to a user via a display. For example, in embodiments the control device 106 is capable of presenting an alert on the display to a user in certain circumstances. This is explained in more detail below.

In embodiments, the CRS 105 and the control device 106 have a direct connection rather than being connected via the network switch 110. For example, the CRS 105 and the control device 106 may be the same device. In further examples, the CRS 105 and the control device 106 may be housed in separate devices but have a direct wired or wireless connection.

In embodiments the network 100 may comprise a plurality of video cameras capturing images of an event such as a football match. For example, the device 1 101 and device 2 102 may both be video cameras that capture 4K video content, device 3 103 may be a video camera that captures HD video content, and device 4 104 may be a display device which displays the video content from devices 101, 102 and 103. However, the disclosure is not limited in this regard and the devices may be any kind of networked device in various embodiments. A device may include the functionality of more than one device or media node. For example, a device may include a sender of data, receiver of data, data source or the like. Furthermore, the network 100 may be any kind of network such as a network in a hospital, school, power station, office, home or the like. In embodiments, the network 100 may be a wired network (using Ethernet, for example) or a wireless network such as a WiFi network conforming to IEEE 802.11a/g or the like. In another example, the network 100 may be a mobile communication network conforming to any of the 3GPP standards, such as Release 14 or Release 15. In a further example, the network may be an Internet of Things (IoT) network. For example, the network switch 110 may be an Infrastructure to Vehicle network and the device in this case would be a vehicle or part of the vehicle's systems.

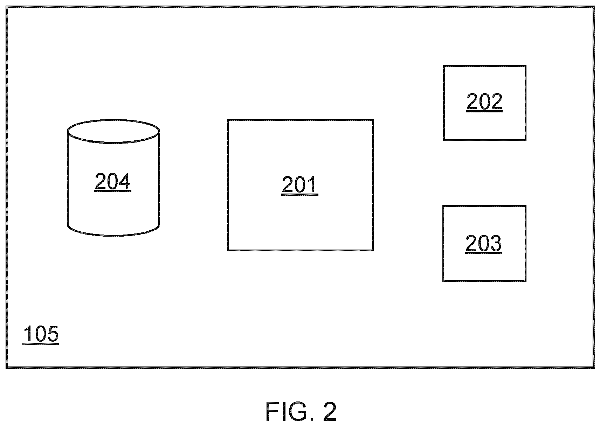

In Figure 2, a block diagram of the CRS 105 is shown. The CRS 105 comprises a communication interface 201 for sending electronic information to and/or receiving electronic information from other devices, such as the network switch 110, the control device 106 and devices 101, 102, 103 and 104, over the network 100. In embodiments, the communication interface 201 is configured for sending and receiving electronic information over connections other than the network 100, for example for sending and receiving electronic information over a direct connection to the control device 106. The CRS 105 further comprises a processor 202 for processing electronic instructions, and a memory 203 for storing the electronic instructions to be processed and input and output data associated with the electronic instructions. The electronic instructions may be received from the control device 106, for example.

The CRS 105 further comprises a storage medium 204 (e.g. in the form of a hard disk drive, solid state drive, tape drive or the like) for long term storage of electronic information, such as device information related to each of the devices 101, 102, 103 and 104 on the network. In embodiments, the CRS 105 is connected to an external database (not shown) such that it can send electronic information to the external database and receive electronic information that is stored on the external database.

Each of the communication interface 201, processor 202 and memory 203 are implemented using appropriate circuitry, for example. The circuitry may be embodied as solid state circuitry which may be controlled by software or may be an Application Specific Integrated Circuit. The software comprises computer readable instructions, which when loaded onto a computer or circuitry, configures the computer (or circuitry) to perform a method according to embodiments. The software is stored on the storage medium 204. The processor 202 controls the operation of each of the communication interface 201, memory 203 and storage medium 204.

When a device 101 joins the network 100, the device 101 sends a request to the CRS 105 comprising device information relating to the device 101. The device information comprises, for example, the device type (e.g. a video camera), a unique identifier associated with the device (e.g. the MAC address), the type of data the device can send over the network (e.g. 4k video content), or the like. The CRS 105 stores the device information in a database, for example in the storage medium 204 and/or in an external database connected to the CRS 105. The device 101 may then send an update message to the CRS 105 in the event of a change in the device operation (for example, a change in connection status of the device, a change in the data format sent by the device, or the like). On receipt of an update message, the CRS 105 updates the stored device information as appropriate.

Whilst the device 101 is connected to the network 100, it sends a periodic heartbeat, or keep-alive signal, to the CRS 105 to indicate that it is still on the network. Keep-alive signals sent by the device 101 in embodiments each comprise the unique identifier associated with the device, so that the CRS 105 can determine the origin of the signal. The device sends the keep-alive signals at a certain predetermined frequency (the keep-alive frequency, or heartbeat frequency), which may be provided to the CRS 105 when the device connects to the network. For example, the predetermined keep-alive frequency may be included in the device information that is sent to the CRS 105 when a device is initially registered on the network.

If the CRS is provided with the predetermined keep-alive frequency, it is therefore able to identify when a device has stopped sending keep-alive signals on time. For example, if a device is configured to send a keep-alive signal once every 200 ms, and the CRS 105 does not receive a signal after 200 ms has elapsed since the previous signal, the CRS 105 will identify that the device has failed to send a keep-alive signal at the correct time (for example when the device has become disconnected from the network). In embodiments, the CRS 105 will then de-register the device from the network 100. In further embodiments, the CRS 105 is configured to allow extra time before de-registering the device from the network. For example, even if the device 101 is expected to send keep-alive signals every 200 ms, the CRS 105 will not de-register the device until it has failed to receive a keep-alive signal for 400 ms.

The CRS 105 therefore maintains an up-to-date record of which devices are connected to the network at a particular time, and up-to-date device information related to each device on the network. The control device 106 can then communicate with the CRS 105 to obtain this information in order to manage connections between devices on the network, for example.

Each device has an expected behaviour on the network. For example, in embodiments a device is configured to follow an appropriate communication protocol when connected to the network 100 such that the device sends messages to the CRS 105 (e.g. registration requests, keep-alive signals, update messages or the like) with a predetermined format, and sends messages to the CRS 105 under predetermined conditions (e.g. when a device is wishing to join the network, when a certain time has passed since sending a previous message, when the device operation has changed, or the like). However, the disclosure is not limited in this regard and in further embodiments the expected behaviour of a device on a network may be determined based on past behaviour of the device on the network, for example. This is discussed in more detail below.

As explained above regarding the receipt of keep-alive signals, the CRS 105 can anticipate the behaviour of the device 101 when it behaves as expected. For example, the CRS 105 can correctly identify when the device 101 disconnects from the network 100 when a keep-alive signal is not received at a predetermined time. However, in some instances a device on the network 100 deviates from its expected behaviour on the network. For example, the device 101 may send keep-alive signals to the CRS 105 too frequently or infrequently, use the wrong syntax when registering on the network 100, send update messages when nothing has changed, or the like. When a device behaves unexpectedly in this manner, the CRS 105 may be unable to maintain an up-to-date record of device information about the device (e.g. if the device does not send updates when something has changed), or maintain an up-to-date record of which devices are connected to the network (e.g. if the device sends keep-alive signals less frequently than the predetermined keep-alive frequency). In another example, the CRS 105 may become overwhelmed with requests (e.g. if the device sends keep-alive signals and/or unnecessary update messages too frequently). This can cause the CRS 105 to be unable to service all the messages it receives, from the device behaving unexpectedly or even from other devices on the network.

When a device behaves unexpectedly the CRS 105 may therefore have incorrect information about which devices are connected to the network 100 at a particular time and/or incorrect device information about one or more devices on the network. The control device 106 will thus be unable to obtain accurate information from the CRS 105 that is needed when controlling the devices on the network and managing connections between them. Moreover, devices are typically configured to have an expected behaviour such that they behave efficiently on the network (for example, by only sending update messages to the CRS when necessary). It is therefore important that a device on the network 100 behaves according to its expected behaviour.

In order to ensure all devices on a network 100 behave in an expected manner, any unexpected behaviour by a device must be identified so that the device can be replaced or its behaviour corrected. However, a device may only deviate from its expected behaviour when other devices are connected to the same network and using it simultaneously. It is therefore desirable to be able to quickly and accurately identify a device which is not behaving as expected on the network in a real-world scenario, rather than during offline testing.

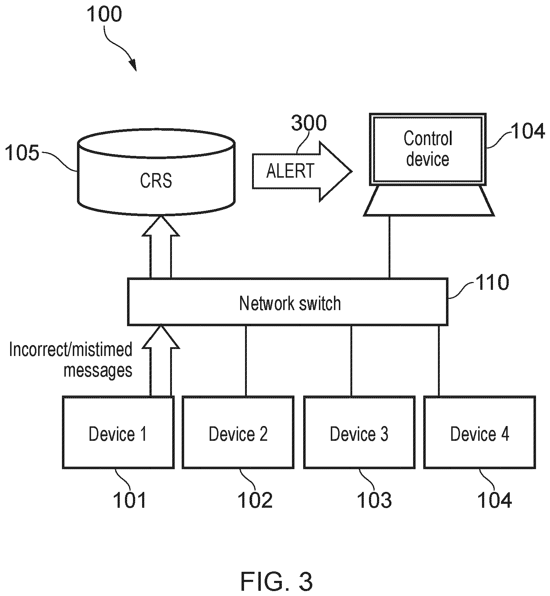

Figure 3 shows the network 100 where the CRS 105 is operating according to embodiments of the disclosure. Device 1 101 is shown sending incorrect and/or mistimed messages to the CRS 105 via the network switch 110. After receiving the messages, the CRS 105 performs a determination process according to embodiments to determine that the messages are incorrect and/or mistimed compared to the expected behaviour of the device 101, and therefore that the current behaviour of the device 101 does not match the expected behaviour of the device within a predetermined boundary. A predetermined boundary in this case means the expected behaviour within a threshold amount either above or below the expected behaviour. The predetermined boundary is defined by a manufacturer of a device, a network operator, a technical standard or by some other mechanism. This is explained in more detail below.

The CRS then generates an alert 300 and sends the alert 300 to the control device 106 to indicate that a device on the network is not behaving as expected. The alert 300 may be sent to the control device 106 via the network switch, or via a direct connection in embodiments where the CRS 105 and the control device 106 have a direct wired or wireless connection. The alert 300 may take any suitable form which indicates to a user that a device on the network is not behaving as expected. For example, in embodiments where the control device 106 comprises a display the alert may comprise text, graphics or the like informing the user that a device is not behaving as expected although the disclosure is not so limited. In embodiments, the alert may be provided to a different device such as mobile device of an administrator of the network so that the administrator is notified of the alert as soon as possible.

Although embodiments have been described in which the CRS 105 sends the alert 300 to another device on the network, such as the control device 106, the disclosure is not limited in this regard. In further embodiments, the CRS 105 generates the alert 300 and does not send the alert 300 to another device on the network. For example, in embodiments the CRS 105 sends the alert 300 to another device that is not on the network. In some embodiments in which the CRS 105 and the control device 106 are the same device, the CRS 105 generates the alert 300 and the alert 300 is provided to a user by the same device.

In embodiments, the alert 300 uniquely identifies which device on the network is not behaving as expected. This may be achieved, for example, by providing the user with device information related to the device which is not behaving as expected (e.g. the device type, the MAC address, IP address, a name which the user has previously assigned the device, or the like). This allows the user to isolate the device which is behaving unexpectedly and disconnect it from the network, or attempt to fix the behaviour (e.g. by re-setting the device), to stop any problems caused by the unexpected behaviour. (e.g. removing a device that is sending the CRS 105 unnecessary updates to prevent the CRS becoming overwhelmed with requests). In embodiments, the alert 300 additionally or alternatively indicates the way in which a device on the network is not behaving as expected. For example, the alert 300 may indicate that a device is sending the CRS 105 unnecessary updates. This can enable the user to fix the behaviour of the device more effectively.

In embodiments of the present disclosure, a method performed by the CRS in order to monitor a device on the network and determine whether it is behaving as expected comprises comparing information associated with the current behaviour of a device to information associated with the expected behaviour of the device.

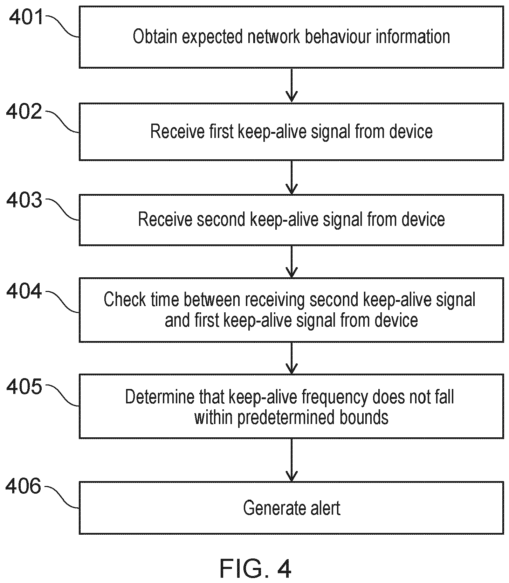

Figure 4 shows a method for monitoring a network according to embodiments. In these embodiments, a device 101 is connected to the network and sending periodic keep-alive signals to the CRS 105.

In step 401, the CRS 105 obtains expected network behaviour information related to the device 101. The expected network behaviour information is information comprising one or more parameters associated with the expected behaviour of the device 101. Parameters associated with this expected behaviour may comprise, for example, a predetermined keep-alive frequency for the device 101 to use, the appropriate format of certain types of messages to be sent, or the like. Parameters may also include predetermined conditions under which a type of message must be sent, for example the condition that a registration request is sent when a device is initially connecting to the network, the condition that an update message is sent when there is a change in the device format settings, or the like. However, the disclosure is not limited in this regard and in embodiments a parameter may comprise any information which indicates a predetermined behaviour of the device on the network.

In the method illustrated in Figure 4, the expected network behaviour information comprises at least a predetermined keep-alive frequency for the device 101.

In embodiments, the CRS 105 obtains expected network behaviour information based on a message received from the device 101. For example, the CRS 105 may obtain expected network behaviour information (such as a predetermined keep-alive frequency) from the device information that is sent to the CRS when the device 101 is initially registered on the network. In another example, the CRS 105 may obtain expected network behaviour information in addition to the device information that is sent to the CRS when the device 101 is initially registered. This may be included in the same message, or sent by the device 101 in a separate message to the CRS 105.

However, the disclosure is not limited in this regard and in further embodiments the CRS 105 may obtain the expected network behaviour information in any suitable manner. For example, the CRS 105 may, having initially received device information related to the device 101, retrieve expected network behaviour information from a stored database that corresponds to the device based on the device information. For example, the CRS 105 may receive device information indicating that the device 101 is a 4k camera encoded using H.264, then retrieve expected network behaviour information corresponding to a 4k camera encoded using H.264 from a database (stored in the storage medium 204 and/or in an external database connected to the CRS 105). In further embodiments, the CRS 105 receives expected network behaviour information from the control device 106. For example, the CRS 105 may receive device information indicating that the device 101 is a 4k camera encoded using H.264, then send a request to the control device 106 over the network. In response to receiving the request, the control device 106 will select expected network behaviour information corresponding to a 4k camera encoded using H.264 from a database, for example, and send a message to the CRS 105 comprising the selected expected network behaviour information. In another example, the expected network behaviour information may be selected based on the specific device rather than the type of device. In further embodiments, the CRS 105 obtains expected network information from a machine learning model which has been trained on past behaviour of the device on the network. This is discussed in more detail below.

In step 402, the CRS 105 receives a first keep-alive signal from the device 101, and records a time at which the first keep-alive signal was received. Then, after a certain time period, the CRS 105 receives a second keep-alive signal from the device 101 in step 403. The CRS 105 then determines the time period between receiving the two keep-alive signals, based on the time the second keep-alive signal was received and the recorded time at which the first keep-alive signal was received, in step 404.

In step 405, the CRS 105 determines whether the current keep-alive frequency (that is, the keep-alive frequency at the time the second keep-alive signal was sent) falls within predetermined bounds of the predetermined keep-alive frequency included in the expected network behaviour information that was obtained in step 401. For example, if the predetermined keep-alive frequency is once every 200 ms, the predetermined bounds may be once every 150-250 ms. In this example, CRS 105 will therefore determine that a keep-alive frequency of 300 ms does not fall within the predetermined bounds.

The CRS 105 therefore determines that the current behaviour of the device 101 on the network is not within a predetermined boundary from an expected behaviour of the device 101 on the network, because a parameter associated with the current behaviour (i.e. the current keep-alive frequency) does not fall within a predetermined boundary from a parameter included in the expected network behaviour information (i.e. it does not fall within predetermined bounds from the predetermined keep-alive frequency included in the expected network behaviour information). As a result, the CRS 105 generates an alert 300 in step 406.

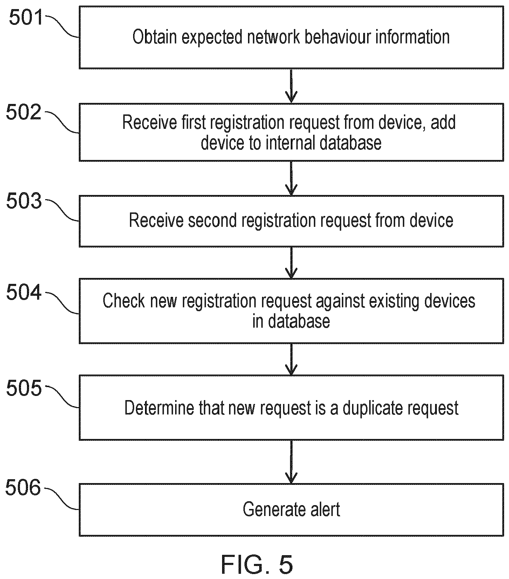

Figure 5 illustrates another method for monitoring a network according to embodiments. In step 501, the CRS 105 obtains expected network behaviour information related to a device 101.

In the method illustrated in Figure 5, the expected network behaviour information comprises the condition that a registration request is only sent when a device is initially connecting to the network. The CRS 105 obtains this expected network behaviour information before receiving a registration request from the device 101. For example, the control device 106 may send the CRS 105 expected network behaviour information to be used for all devices that connect to the network (or all devices of a particular type, e.g. all 4k cameras, or the like).

In step 502, the CRS 105 receives a first registration request from the device 101, and adds the device 101 to its internal database. In step 503, the CRS 105 receives a second registration request from the device. Then, in step 504 the CRS 105 checks the new registration request against existing devices in its database, to determine whether the device 101 is already connected to the network. In step 505, the CRS 105 determines that the second registration request was sent by an existing device in the database (that is, a device already connected to the network) and thus is a duplicate request. It is therefore determined that the network behaviour of the device 101 at the time the second registration request message was sent (that is, the current behaviour of the device) does not meet the condition that a registration request is only sent when a device is initially connecting to the network.

The CRS 105 therefore determines that the current behaviour of the device 101 on the network is not within a predetermined boundary from an expected behaviour, because a parameter associated with the current behaviour (i.e. the classification of the second registration request as a duplicate request) does not fall within a predetermined boundary from a parameter included in the expected network behaviour information (i.e. it does not meet a the condition included in the expected network behaviour information). As a result, the CRS 105 generates an alert 300 in step 506.

Although the methods illustrated in Figures 4 and 5 have been discussed above, the present disclosure is not limited in this regard. In various embodiments, a method of monitoring a network 100 generally comprises receiving one or more messages from a device on the network, determining a parameter associated with the current behaviour of the device, and comparing this parameter to a parameter associated with an expected behaviour of the device. When it is determined that the current behaviour does not match the expected behaviour within predetermined bounds, the method further comprises sending an alert to another device (e.g. the control device 106).

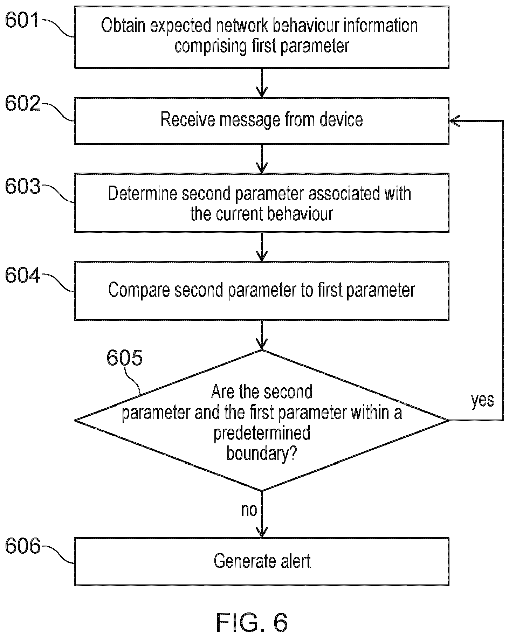

Figure 6 shows a flowchart summarising a method for monitoring a network according to various embodiments of the present disclosure.

In step 601, the CRS 105 obtains expected network behaviour information comprising a first parameter associated with an expected behaviour of a device 101. For example, in the method according to Figure 4 the expected network behaviour information comprises a predetermined keep-alive frequency for the device 101. In the method according to Figure 5, the expected network behaviour information comprises the condition that a registration request is only sent when the device 101 is initially connecting to the network.

In step 602, the CRS 105 receives a message from the device 101. For example, in the method according to Figure 4 the CRS 105 receives a second keep-alive signal from the device 101 (having previously received a first keep-alive signal from the device 101). In the method according to Figure 5, the CRS 105 receives a second registration request from the device 101 (having previously received a first registration request from the device 101).

In step 603, the CRS 105 determines a second parameter associated with the current behaviour of the device 101. For example, in the method according to Figure 4 the CRS 105 determines the keep-alive frequency at the time the second keep-alive signal was sent. In the method according to Figure 5, the CRS 105 determines that the second registration request from the device 101 was a duplicate request.

In step 604, the CRS 105 compares the second parameter associated with the current behaviour to the first parameter associated with the expected behaviour, and in step 605 it is determined whether the second parameter and the first parameter are within a predetermined boundary. For example, in the method according to Figure 4 the CRS 105 determines whether the current keep-alive frequency falls within predetermined bounds of the predetermined keep-alive frequency included in the expected network behaviour information. In the method according to Figure 5, the CRS 105 determines whether a registration request that is a duplicate request meets the condition that a registration request is only sent when a device is initially connecting to the network.

If it is determined that the second parameter and the first parameter are within the predetermined boundary, the CRS 105 determines that the current behaviour of the device on the network 100 is within a predetermined boundary from an expected behaviour. The method then returns to step 602. If it is determined that the second parameter and the first parameter are not within the predetermined boundary, the CRS 105 determines that the current behaviour of the device is not within a predetermined boundary from an expected behaviour and generates an alert 300 in step 606. For example, in embodiments the CRS 105 sends an alert to a second device on the network 100 such as the control device 106.

As noted above, the disclosure is not limited to the examples discussed with respect to Figures 4 and 5. For example, the expected network behaviour information may comprise any suitable parameter which indicates an expected behaviour of a device on the network, and the CRS 105 may determine any suitable parameter which indicates a current behaviour of the device on the network based on a message received from the device.

In further embodiments, in step 601 the CRS 105 obtains expected network behaviour information comprising a list of situations in which a device 101 must send an update message to the CRS 105. The expected network behaviour information may comprise, for example, the condition that the device 101 must send an update when it has been instructed to start sending a different type of video content over the network (e.g. 8k video content, when previously it was sending 4k video content). The CRS 105 then receives an update message from a device 101 in step 602, obtaining the current video format settings of the device that are indicated by the update message, and compares these to previous video format settings of the device stored in the internal database of the CRS. The CRS 105 determines the change in video format settings of the device compared to previous settings (that is, the CRS 105 determines a parameter associated with the current behaviour of the device) in step 603, and compares this to the condition included in the expected network behaviour information in step 604. If it is determined that the device 101 sent an update message when there was no change in the video format settings, the CRS 105 determines that this parameter does not fall within a predetermined boundary from a parameter of the expected network behaviour information, in step 605. That is, the current difference in video format settings (no change) does not meet the condition that an update message must be sent when there is a change in the video format settings. In step 606 the CRS then sends an alert to a second device, for example the control device 106, such that a user is informed that a device on the network is not behaving as expected.

In the embodiments discussed thus far, the method carried out by the CRS 105 involves checking the current behaviour of a device against a set of predetermined rules. That is, the expected network information comprises predetermined parameters which characterise the behaviour of a device in a perfect scenario, rather than being representative of how a device typically behaves on the network. However, the disclosure is not limited in this regard. In further embodiments, expected network information for a device is obtained from a machine learning model which has been trained on one or more parameters associated with past network behaviour.

Such a machine learning model is trained using examples of device behaviour on the network over a certain period of time (that is, during a training phase). Any suitable machine learning technique known in the art may be used, for example a support vector machine model, a deep neural network, a random forest learning method, a statistical pattern recognition method such as a cluster analysis algorithm, or the like. The device behaviour may comprise sending messages over the network in multiple different valid modes of operation (e.g. transmitting video in 4k mode, transmitting video in HD mode, transmitting video with or without audio in a given format, sending keep-alive signals and/or update messages to the CRS 105, or the like).

The device behaviour may be represented by a number of parameters associated with information regarding the device and the way in which it operates on the network during the training phase. For example, such parameters may be associated with information that the device has registered about itself (e.g. video format, frame rate, colour space, bit rate, audio format, audio sample rate or the like), and/or information about the capability of the device (e.g. the range of resolutions, frame rates, or the like that the device is capable of supporting). In some embodiments, the device behaviour is represented by parameters regarding how the device sends messages on the network (e.g. network bandwidth used, emitted packet count, received packet count, content / frequency of messages sent by device, time taken to respond to a message or the like).

In some embodiments, the device behaviour comprises the contents of messages sent by the device to the CRS 105 over the network, for example in the case where the message payload is carried in a structured form such as JavaScript Object Notation (JSON). Such data comprising message content that is collected during the training phase may then be treated as unstructured data by the machine learning model, after appropriate pre-processing of the message payload, and used to model the typical messages expected from a device.

Having obtained the expected network information for a device from the machine learning model, the CRS 105 then monitors the behaviour of the device on the network 100 in real-time and compares the current behaviour to the expected behaviour. As in the previously-described embodiments, the CRS 105 then generates an alert 300 in the event that the current behaviour of the device deviates from the expected behaviour within a predetermined boundary. For example, in embodiments where the model is trained on device behaviour comprising the contents of messages sent by a device to the CRS 105 over the network, the CRS 105 generates an alert when it is identified that the device has sent a message over the network with an unusual message payload.

In embodiments, the machine learning model is trained using examples of device behaviour on the network corresponding to the same device that is being monitored. For example, when a new device is connected to the network for the first time, there is an initial training phase period in which data relating to the device behaviour is collected and used to train the machine learning model. Thereafter, when the device connects to the network the CRS 105 retrieves the appropriate expected behaviour of the device corresponding to the training data based on how the device itself initially behaved in the training phase. In further embodiments however, the machine learning model is trained using examples of device behaviour on the network corresponding to another device. For example, the model may be trained on one or more devices of a particular class of device (that is, devices of a particular device type, such as video transmitters, video displays, audio transmitters, or the like). When a device connects to the network, the CRS 105 identifies the particular class of device and retrieves the appropriate expected behaviour of the device corresponding to training data based on the behaviour of devices from the same class.

Thus in various embodiments the expected behaviour of a device is obtained from a machine learning model trained on how the same device has previously behaved on the network and/or trained on how similar devices have behaved on the network. However, the disclosure is not limited in this regard and in further embodiments the machine learning model may be trained using any suitable training data which is indicative of how a device can be expected to behave on the network. For example, in some embodiments the model is trained using examples of device behaviour on another network (e.g. examples of device behaviour in a similar network environment, wherein a similar collection of other devices are using the network at the same time).

With reference to the method illustrated in Figure 6, in embodiments where the expected network information is obtained from a machine learning model trained on parameters associated with past network behaviour of a device, step 601 of the method therefore comprises obtaining expected network information from the machine learning model. In step 602, the CRS 105 then receives one or more messages from the device when monitoring the network 100. An Al engine is then used to carry out steps 603, 604 and 605 by comparing one or more parameters associated with the current behaviour of the device with the expected behaviour of the device, using any suitable machine learning technique known in the art. The Al engine is therefore able to detect any deviations from the expected behaviour of the device within a predetermined boundary, such that the CRS 105 can then send an alert 300 to a second device.

By taking into account the past behaviour of the device (or the past behaviour of a similar device) on the network 100, the CRS 105 is able to identify a deviation from the past behaviour, rather than identifying whether the device is behaving according to a predetermined perfect scenario. For example, a predetermined keep-alive frequency may be 200 ms for a particular device, but in practice the device (or devices of the same type) typically sends keep-alive signals every 250 ms on the network. In this scenario, the CRS 105 may determine that a device deviates from its expected behaviour when its keep-alive frequency falls outside the bounds of 200-300 ms. That is, the predetermined bounds are determined with respect to parameters associated with past network behaviour rather than predetermined parameters.

Furthermore, using a machine learning model that takes into account a number of parameters associated with past behaviour of a device allows the CRS 105 to identify when a device is behaving abnormally in a manner that has not been anticipated. For example, the CRS 105 is able to identify a change in behaviour of a device with respect to parameters which do not have a predetermined 'perfect scenario' setting to use as a baseline (e.g. identifying when the data rate of device is unexpectedly low or high for the current mode of operation, when the response time of the device is unexpectedly high, when the device is sending updates more frequently than usual, or the like).

In the embodiments described above, the CRS 105 is configured to perform the method of monitoring the network. However, the disclosure is not limited in this regard and in further embodiments one or more method steps according to the disclosure may be performed by a device or devices other than the CRS 105.

For example, in some embodiments the control device 106 is configured to manage connections between devices to the network 100 and monitor certain behaviour of the devices (e.g. the response time of each device) itself. In these embodiments the control device 106 may provide an alert 300 directly to a user if it is detected that a current behaviour of a device does not match the expected behaviour of the device. In another example, the network switch 110 may monitor certain behaviour of one or more devices on the network (for example, identifying whether the packet counts, data flow or the like from each device is as expected) in addition to, or as an alternative to, the CRS 105.

In further embodiments, the device that is performing the monitoring method obtains information relating to the current behaviour of a device being monitored from another device on the network. That is, in step 603 of the method illustrated in Figure 6, the second parameter associated with the current behaviour of a device 101 is not determined based on a message received from the device 101 itself (in step 602) but obtained from elsewhere on the network. For example, the CRS 105 may receive information about the device 101 (such as the response time, the packet count or the like) from the control device 106 and/or the network switch 110 on the network 100.

Numerous modifications and variations of the present disclosure are possible in light of the above teachings. It is therefore to be understood that within the scope of the appended claims, the disclosure may be practiced otherwise than as specifically described herein.

In so far as embodiments of the disclosure have been described as being implemented, at least in part, by software-controlled data processing apparatus, it will be appreciated that a non-transitory machine-readable medium carrying such software, such as an optical disk, a magnetic disk, semiconductor memory or the like, is also considered to represent an embodiment of the present disclosure.

It will be appreciated that the above description for clarity has described embodiments with reference to different functional units, circuitry and/or processors. However, it will be apparent that any suitable distribution of functionality between different functional units, circuitry and/or processors may be used without detracting from the embodiments.

Described embodiments may be implemented in any suitable form including hardware, software, firmware or any combination of these. Described embodiments may optionally be implemented at least partly as computer software running on one or more data processors and/or digital signal processors. The elements and components of any embodiment may be physically, functionally and logically implemented in any suitable way. Indeed the functionality may be implemented in a single unit, in a plurality of units or as part of other functional units. As such, the disclosed embodiments may be implemented in a single unit or may be physically and functionally distributed between different units, circuitry and/or processors.

Although the present disclosure has been described in connection with some embodiments, it is not intended to be limited to the specific form set forth herein. Additionally, although a feature may appear to be described in connection with particular embodiments, one skilled in the art would recognize that various features of the described embodiments may be combined in any manner suitable to implement the technique.

Embodiments of the present technique can generally described by the following numbered clauses:
1) A method of monitoring a network, comprising:
   obtaining expected network behaviour information relating to a first device on the network, the expected network behaviour information comprising a first parameter associated with an expected behaviour of the first device on the network;
   receiving a message from the first device over the network;
   determining, based on the message, a second parameter associated with a current behaviour of the first device on the network,
   determining whether the current behaviour of the first device on the network is within a predetermined boundary from the expected behaviour by comparing the second parameter to the first parameter; and
   generating an alert when it is determined that the current behaviour of the first device on the network is not within the predetermined boundary from the expected behaviour.
2) A method according to clause 1, further comprising sending the alert to a second device on the network.
3) A method according to clause 2, wherein the first device and the second device are the same device.
4) A method according to any preceding clause, wherein the expected network behaviour information is received from the first device over the network.
5) A method according to any preceding clause, wherein the expected network behaviour information is obtained from a machine learning model which has been trained on one or more parameters associated with past network behaviour of the first device.
6) A method according to any preceding clause, wherein the expected network behaviour information is obtained from a machine learning model which has been trained on one or more parameters associated with past network behaviour of an other device, wherein the other device is in the same class of device as the first device.
7) A method according to any preceding clause, wherein the first parameter is an expected heartbeat frequency of the first device, and the second parameter is a current heartbeat frequency of the first device.
8) A method according to any one of clauses 1) to 6), wherein the first parameter is an expected registration request condition of the first device, and the second parameter is a current registration request condition of the first device.
9) A method according to any one of clauses 1) to 6), wherein the first parameter is an expected update condition of the first device, and the second parameter is a current update condition of the first device.
10) A method according to any one of clauses 1) to 6), wherein the first parameter is an expected data rate of the first device, and the second parameter is a current data rate of the first device.
11) A method according to any one of clauses 1) to 6), wherein the first parameter is an expected response time of the first device, and the second parameter is a current response time of the first device.
12) A method according to any one of clauses 1) to 6), wherein the first parameter is an expected update frequency of the first device, and the second parameter is a current update frequency of the first device.
13) A computer program product comprising computer readable instructions which, when loaded onto a computer, configures the computer to perform a method according to any preceding clause.
14) A device (105) for monitoring a network (100), comprising circuitry configured to:
   obtain expected network behaviour information relating to a first device on the network, the expected network behaviour information comprising a first parameter associated with an expected behaviour of the first device on the network;
   receive a message from the first device over the network;
   determine, based on the message, a second parameter associated with a current behaviour of the first device on the network,
   determine whether the current behaviour of the first device on the network is within a predetermined boundary from the expected behaviour by comparing the second parameter to the first parameter; and
   generate an alert when it is determined that the current behaviour of the first device on the network is not within the predetermined boundary from the expected behaviour.

## Claims

1. A method of monitoring a network, comprising:
obtaining expected network behaviour information relating to a first device on the network, the expected network behaviour information comprising a first parameter associated with an expected behaviour of the first device on the network;
receiving a message from the first device over the network;
determining, based on the message, a second parameter associated with a current behaviour of the first device on the network,
determining whether the current behaviour of the first device on the network is within a predetermined boundary from the expected behaviour by comparing the second parameter to the first parameter; and
generating an alert when it is determined that the current behaviour of the first device on the network is not within the predetermined boundary from the expected behaviour.

2. A method according to claim 1, further comprising sending the alert to a second device on the network.

3. A method according to claim 2, wherein the first device and the second device are the same device.

4. A method according to claim 1, wherein the expected network behaviour information is received from the first device over the network.

5. A method according to claim 1, wherein the expected network behaviour information is obtained from a machine learning model which has been trained on one or more parameters associated with past network behaviour of the first device.

6. A method according to claim 1, wherein the expected network behaviour information is obtained from a machine learning model which has been trained on one or more parameters associated with past network behaviour of an other device, wherein the other device is in the same class of device as the first device.

7. A method according to claim 1, wherein the first parameter is an expected heartbeat frequency of the first device, and the second parameter is a current heartbeat frequency of the first device.

8. A method according to claim 1, wherein the first parameter is an expected registration request condition of the first device, and the second parameter is a current registration request condition of the first device.

9. A method according to claim 1, wherein the first parameter is an expected update condition of the first device, and the second parameter is a current update condition of the first device.

10. A method according to claim 1, wherein the first parameter is an expected data rate of the first device, and the second parameter is a current data rate of the first device.

11. A method according to claim 1, wherein the first parameter is an expected response time of the first device, and the second parameter is a current response time of the first device.

12. A method according to claim 1, wherein the first parameter is an expected update frequency of the first device, and the second parameter is a current update frequency of the first device.

13. A computer program product comprising computer readable instructions which, when loaded onto a computer, configures the computer to perform a method according to any preceding claim.

14. A device (105) for monitoring a network (100), comprising circuitry configured to:
obtain expected network behaviour information relating to a first device on the network, the expected network behaviour information comprising a first parameter associated with an expected behaviour of the first device on the network;
receive a message from the first device over the network;
determine, based on the message, a second parameter associated with a current behaviour of the first device on the network,
determine whether the current behaviour of the first device on the network is within a predetermined boundary from the expected behaviour by comparing the second parameter to the first parameter; and
generate an alert when it is determined that the current behaviour of the first device on the network is not within the predetermined boundary from the expected behaviour.
